# EUROPÄISCHE PATENTSCHRIFT

(11) **EP 0 426 889 B1**
(45) Veröffentlichungstag und Bekanntmachung des Hinweises auf die Patenterteilung: **02.11.1994**
(21) Anmeldenummer: 89120572.6
(22) Anmeldetag: 07.11.1989
(51) Int. Cl.: H02G 3/04

(54) **Anschlusseinrichtung für Ver- und Entsorgungssysteme an Arbeitsplätzen oder Pflege- und Behandlungsplätzen**
Connection device for connection and disconnection in workplaces or places for the care and treatment of patients
Dispositif de connexion pour système d'alimentation et d'évacuation de places de travail ou de soins et de traitement

(43) Veröffentlichungstag der Anmeldung: 15.05.1991
(73) Patentinhaber: Zumtobel Licht GmbH, D-61250 Usingen (DE)
(72) Erfinder: Wanner, Wolfgang, D-6056 Heusenstamm (DE)
(74) Vertreter: Luderschmidt, Wolfgang, Dr. Dipl.-Chem.

(56) Entgegenhaltungen:
- AT-B- 361 072
- DE-A- 1 690 189
- DE-A- 3 708 357
- DE-U- 1 993 994
- US-A- 3 911 637

## Beschreibung

Die Erfindung betrifft eine Anschlußeinrichtung für Ver- und Entsorgungssysteme an Arbeitsplätzen oder an Pflege- und Behandlungsplätzen, bei der im Inneren einer kanalartigen Anschlußschiene ggf. neben anderen Systemen auch elektrische Versorgungssysteme in Form von verschiedenen elektrischen Stromkreisen zugehörigen Stromversorgungsleitungen und an zugänglichen Teilen an der Außenseite der Anschlußschiene angeordneten Anschlußelementen aufgenommen sind, wobei eine Mehrzahl von gegeneinander abgetrennten Aufnahmekanälen für elektrische Leitungen gebildet ist, die jeweils nur einen Teil des Innenquerschnitts der Anschlußschiene einnehmen, und mittels Verschlußeinrichtungen gegenüber dem übrigen Innenraum der Anschlußschiene verschließbar oder zumindest sicherbar sind.

Bei einer aus DE-U-1 993 994 bekannten kombinierten Anschlußeinrichtung dieser Art sind im Inneren einer kanalartigen Anschlußschiene mittels U-Profilleisten zwei nach dem Innenraum der Anschlußschiene hin offene, sich in Längsrichtung der Anschlußschiene parallel erstreckende Aufnahmekanäle gebildet. In dem einen Aufnahmekanal sind die elektrischen Starkstromleitungen und in dem anderen Aufnahmekanal die elektrischen Schwachstromleitungen angeordnet. Jede dieser beiden Gruppen von elektrischen Leitungen können als je ein Kabelbaum zusammengefaßt sein, der in dem jeweiligen Aufnahmekanal gehalten ist. Bei einer ähnlichen aus der DE-A-1 690 189 bekannten Anschlußeinrichtung für verschiedenartige Versorgungssysteme ist das wesentliche Element der Anschlußschiene als Kanalelement aus einer stranggepreßten Profilschiene gebildet, die im wesentlichen E-förmiges Profil aufweist und an ihrer offenen Vorderseite mit einem Deckel oder einer Geräteschiene abgedeckt ist. Durch das E-förmige Profil ist der Innenraum der Anschlußschiene im wesentlichen in zwei kanalartigen Längskammern unterteilt, in welchen die elektrischen Versorgungsleitungen untergebracht sind, und zwar vorzugsweise in zu Kabelbäumen zusammengefaßter Form.

Bei den bekannten Anschlußeinrichtungen müssen insbesondere die Starkstromleitungen aus Sicherheitsgründen vielfach als Schlauchleitungen ausgebildet sein, d.h. solche elektrische Leitungen, bei denen die zu einem Stromkreis gehörenden und mit Betriebsisolation versehenen elektrischen Leiter noch mit einem Schlauch oder Mantel umgeben sind. Der Schlauchkanal kann dabei über die isolierten einzelnen Leiter geformt oder auch einfach übergezogen sein. Solche Schlauchleitungen sind gegenüber den nur mit Betriebsisolation versehenen elektischen Leitern erheblich teuerer und haben wesentlich größeren Platzbdarf, der vielfach bei Anschlußeinrichtungen, die eine große Anzahl von Ver- und Entsorgunssysteme enthalten, nicht zur Verfügung steht. Außerdem ist die Montage von als Schlauchleitungen ausgebildeten elektrischen Versorungsleitungen schon dadurch wesentlich erschwert und verteuert, daß an Anschlußelemente heranzuführende einzelne elektrische Leiter aus der Schlauchleitung herausgezogen werden müssen, was vielfach die Unterbrechung der Schlauchleitung und den Einsatz eines Verbindungselementes erforderlich macht.

Aus der DE-A-37 08 357 ist ein Leitungsinstallationskanal bekannt, der einen im wesentlichen rechteckigen Querschnitt mit einer Rückwand und Seitenwandungen aufweist, wobei die offene Vorderseite durch einen Deckel verschließbar ist. Mit der Kanalrückwand ist durch Verrasten, Kleben, Schweißen oder andre Fügetechniken eine besondere Grundplatte verbunden, die gegeneinander abgetrennte Aufnahmekanäle trägt. Mit Hilfe federnder Klammerleisten werden Abdeckleisten zum Abdecken der Aufnahmekanäle aufgerastet. Um an die in den Aufnahmekanälen befindlichen elektrischen Leitungen zu gelangen, muß die Abdeckleiste entfernt werden.

Aus der AT-B-36 10 072 ist ein Montagekanal zur Aufnahme von Leitungen bekannt, in dem einzelne Kammern vorgesehen sind, die ebenfalls mit einrastbaren Platten oder Leisten abgedeckt sind.

Es ist daher Aufgabe der Erfindung, Anschlußeinrichtungen der eingangs angeführten Art dahingehend zu verbessern, daß unter voller Aufrechterhaltung der durch die Verwendung von Schlauchleitungen erreichten Sicherheit nur mit Betriebsisolation ausgestattete einzelne elektrische Leiter als elektrische Versorgungsleitungen auf einfache Weise eingesetzt werden können.

Diese Aufgabe wird erfindungsgemäß dadurch gelöst, daß eine der Anschlußschiene eingesetzte Profilschiene mit kammartiger Querschnittsform vorgesehen ist, die eine für alle Aufnahmekanäle gemeinsame Bodenwand und zwischen den Aufnahmekanälen angeordnete Trennwände bildet, wobei die Trennwände an ihrer der Bodenwand entgegengesetzten Längskante sich einander gegenüberstehende elastisch oder gummielastisch nachgiebig ausgebildete Verschlußleisten an der offenen Seite der Aufnahmekanäle aufweist, die zwischen ihren einander zugewandten Kanten schlitzförmige Zugänge zu den Aufnahmekanälen bilden, und daß unterschiedlichen Stromkreisen zugehörende elektrische Leitungen in getrennten Aufnahmekanälen eingelagert sind.

Durch die Erfindung wird erreicht, daß über die Länge der Anschlußschiene nur zu ein und demselben Stromkreis gehörende, mit Betriebsisolation versehene elektrische Leiter in Berührung kommen, aber andererseits diese elektrischen Leiter voneinander unabhängig sind, so daß eine raumsparende Anordnung möglich ist. Die einzelnen elektrischen Leiter können unabhängig voneinander in ihrer Länge unterschiedlich bemessen werden, je nach Lage des Anschlußelementes längs der Anschlußschiene an das der jeweilige elektrische Leiter heranzuführen ist. Soll die Anschlußeinrichtung mit Anschlußeinrichtungen und entsprechenden elekrischen Versorgungsleitungen nachgerüstet werden, so können die entsprechenden nur mit Betriebsisolation versehenen elektrischen Leiter nachträglich in einen dem jeweiligen Stromkreis zugeordneten Aufnahmekanal eingeführt werden.

Dabei können die Trennwände bzw. Seitenwände der Aufnahmekanäle und/oder die Verschlußleisten elastisch oder gummieelastisch nachgiebig ausgebildet sein. Auf diese Weise wird der Zugang zu jedem Aufnahmekanal normalerweise elastisch geschlossen gehalten und nur zum Einführen oder Herausnehmen einer elektrischen Leitung durch Verformen der jeweiligen Trennwände bzw. Seitenwände des Aufnahmekanals und der Verschlußleisten zeitweilig und an der jeweilig erforderlichen Stelle geöffnet. Auf diese Weise werden die mit Betriebsisolation versehenen elektrischen Leitungen sicher innerhalb der jeweiligen Aufnahmekanälen gehalten. Zusätzlich zu den Verschlußleisten oder anstatt der Verschlußleisten kann ein schienenförmiges Deckelement über die Gesamtheit der Zugänge zu den Aufnahmekanälen abnehmbar aufgesetzt sein. Hierdurch wird in einfacher Weise eine besonders sichere Abdeckung der Aufnahmekanäle erreicht.

Zur Bildung der Verschlußeinrichtung für die Aufnahmekanäle kann auch vorgesehen sein, daß zwischen den Aufnahmekanälen vorgesehene Trennwände an ihrer dem Innenraum der Anschlußschiene zugewandten Kante eine Verschlußlasche tragen, die jeweils gegen die Kante der benachbarten Trennwand bewegbar und dort lösbar befestigbar ist. Diese Verschlußlasche kann vorzugsweise flexibel ausgebildet sein. Im Unterschied zu der Benutzung eines zusätzlichen schienenförmigen Deckelementes kann die Verschlußlasche für jeden einzelnen Aufnahmekanal unabhängig vorgesehen sein, so daß jeder Aufnahmekanal unabhängig von den übrigen Aufnahmekanälen geöffnet und verschlossen werden kann. Eine besonders günstige Möglichkeit für die Ausbildung der Schließeinrichtung der Verschlußlaschen kann vorsehen, daß die Verschlußlaschen längs ihres freien Endes mit einer Verdickung ausgebildet sind und die Trennwände längs ihrer dem Innenraum der Anschlußschiene zugewandten Längskante mit einer die Verdickung jeweils einer Verschlußlasche aufnehmenden Rastnut versehen sind.

Die Profilleiste kann direkt in das Profil der Anschlußschiene eingeformt sein. Bevorzugt ist jedoch die Profilleiste als getrenntes Element in die Anschlußschiene eingesetzt.

Im Rahmen der Erfindung lassen sich die Aufnahmekanäle nicht allein als mechanische Trennung der elektrischen Leitungen unterschiedlicher Stromkreise benutzen, sondern auch als Einrichtungen zur Verbesserung der elektrischen Isolation. In solchem Fall wird man bevorzugt vorsehen, daß die Wandung der Aufnahmekanäle aus elektrisch isolierendem Werkstoff, vorzugsweise elastisch oder gummielastisch verformbaren Kunststoff gebildet, gebildet ist. Es ist auch möglich, die Aufnahmekanäle zur Abschirmung der elektrischen Leitungen gegen Aufnahme oder Abstrahlung von elektromagnetischen Wellen oder elektrische Induktion heranzuziehen. Hierzu können die Trennwände und die Bodenwand der Aufnahmekanäle aus gegenüber elektromagnetischen Strahlen und/oder elektrischer Induktion abschirmendem Material bestehen. Es kann hierzu auch vorgesehen sein, daß die Trennwände und die Bodenwand der Aufnahmekanäle gegenüber elektromagnetischen Strahlen und/oder elektrischer Induktion abschirmende Einlageelemente enthalten.

Ausführungsbeispiele der Erfindung werden im folgenden anhand der Zeichnung näher erläutert. Es zeigen:
- Figur 1: eine Ausführungsform der erfindungsgemäßen Anschlußeinrichtung im Querschnitt;
- Figur 2: einen vergrößerten Querschnittsabschnitt, der erfindungsgemäß in die Anschlußschiene der Anschlußeinrichtung gemäß Figur 1 eingesetzten Profilschiene;
- Figur 3: einen Querschnittsabschnitt einer abgewandelten Ausführung der Profilschiene;
- Figur 4: der Querschnitt einer weiteren abgewandelten Profilschiene;
- Figur 5: den Querschnitt einer weiteren Abwandlung der Profilschiene;
- Figur 6: eine zweite Ausführungsform der erfindungsgemäßen Anschlußeinrichtung im Querschnitt;
- Figur 7: den Teil 7 der Figur 6 in vergrößerter Darstellung und
- Figur 8: den Querschnitt einer für den Einsatz in eine Anschlußeinrichtung nach Figur 6 einsetzbaren, abgewandelten Profilschiene.

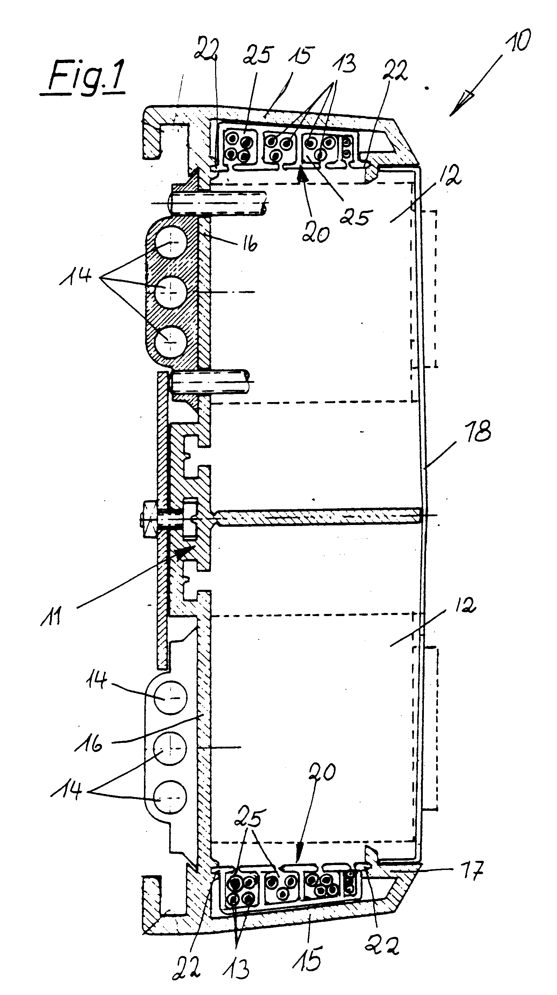

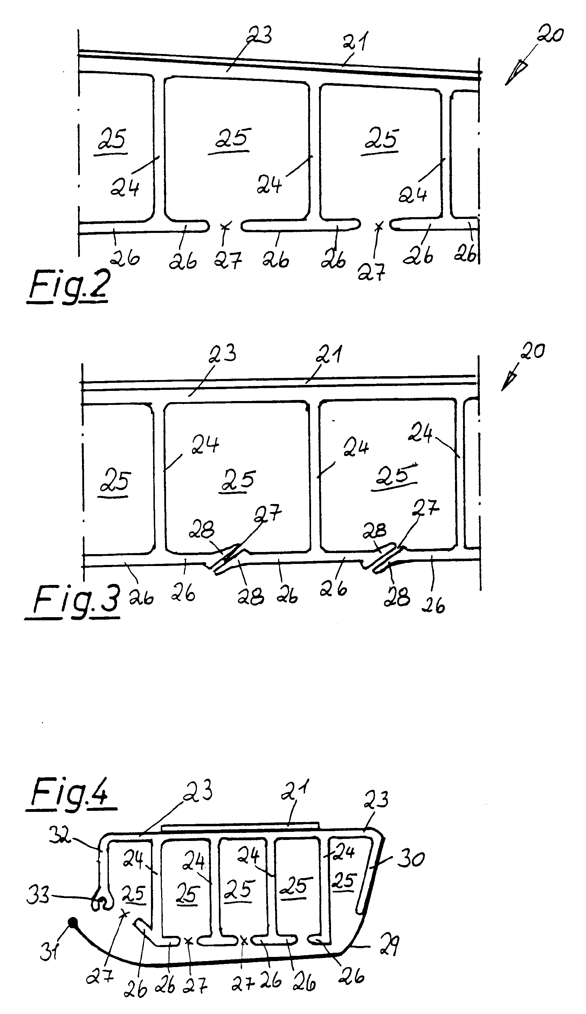

Im Beispiel der Figuren 1 und 2 weist die Anschlußeinrichtung 10 eine kanalartige Anschlußschiene 11 auf, in die unterschiedliche Versorgungssysteme eingebaut sind. Diese Versorgungssysteme enthalten Anschlußelemente 12, wie sie in Figur 1 gestrichelt dargestellt sind. Als solche Anschlußelemente kommen in Betracht: Elektrische Starkstrom-Steckdosen, insbesondere Schutzkontaktsteckdosen, Schwachstrom-Steckdosen für Telekommunikationssysteme, ferner Gassteckdosen und Flüssigkeitssteckdosen. Ferner enthalten die Versorgungssysteme elektrische Versorgungsleitungen 13 für Starkstrom, nicht dargestellte Versorgungsleitungen für Schwachstrom und Telekommunikationssysteme. Ferner sind vorgesehen: Versorgungsleitungen 14 für gasförmige und flüssige Medien, beispielsweise für Sauerstoff, Lachgas usw..

Wie Figur 1 zeigt, sind im dargestellten Beispiel die Versorgungsleitungen 13 für Starkstromsysteme im Bereich der Seitenwände 15 der Anschlußschiene 11 angeordnet. Die in Figur 1 gezeigte Anschlußschiene 11 weist an der der Bodenwand 16 entgegengesetzten freien Kante eine an jede Seitenwand 15 angeformte Halteleiste 17 für den Deckel 18. Die Innenseite der jeder Seitenwand 15 bildet somit zusammen mit der Bodenwand 16 und der Halteleiste 17 eine für die Aufnahme von elektrischen Starkstromleitungen 13 geeignete, sich längs der Anschlußschiene 11 erstreckende Aufnahmenische entlang der Innenseite jeder Seitenwand 15. In jede dieser beiden Nischen ist eine Profilschiene 20 eingesetzt und beispielsweise mittels eines doppelseitigen Klebebandes 21 an der Innenseite der jeweiligen Seitenwand 15 befestigt. Zusätzlich oder stattdessen kann die Profilschiene 20 auch an ihren beiden Seiten mit vorstehenden Rippen 22 versehen sein, die in entsprechende Nuten an der Bodenwand 16 und der Halteleiste 17 greifen.

Jede der beiden Profilschienen 20 weist kammartigen Querschnitt auf, d.h. eine gemeinsame Bodenwand 23 und sich von dieser erstreckende Trennwände 24. Auf diese Weise werden zwischen den Trennwänden 24 Aufnahmekanäle 25 gebildet. Um eine Sicherung gegen ungewolltes Einführen oder Herausfallen elektrischer Leitungen 13 zu bilden, sind diese Aufnahmekanäle an ihrer der Bodenwand 23 gegenüberliegenden Seite mit Verschlußeinrichtungen versehen. Im Beispiel der Figuren 1 und 2 sind diese Verschlußeinrichtungen durch an der freien Kante der Trennwände gebildete, sich einander gegenüberstehende Verschlußleisten 26 gebildet. Diese Verschlußleisten 26 lassen einen schlitzförmigen Zugang 27 zu jedem Aufnahmekanal 25 frei. Diese schlitzförmigen Zugänge 27 sind aber ausreichend eng, um eine elektrische Leitung 13 nur unter elastischem Verformen der Verschlußleisten 26 und ggf. auch der Trennwände 24 zuzulassen.

Um solche elastische Verformung zu ermöglichen, sind die Profilschienen 20 in diesem Beispiel aus weichem Kunststoff, beispielsweise Polyethylen oder Polypropylen hergestellt.

Die auf diese Weise gebildete Mehrzahl von Aufnahmekanälen 25 ermöglicht es, solche elektrische Leitungen, insbesondere Starkstromleitungen in der Anschlußschiene 11 zu verlegen, die nur mit Betriebsisolation versehen sind. Die mit Betriebsisolation versehenen elektrischen Leitungen 13 sind nach elektrischen Stromkreisen, denen sie angehören, zu ordnen, wobei nur solche elektrischen Leitungen 13 in ein und denselben Aufnahmekanal 25 einzuführen sind, die zu ein und demselben Stromkreis gehören.

Im Beispiel der Figur 3 ist die Profilschiene 20 insofern gegenüber derjenigen nach Figur 1 und 2 abgewandelt, als enger schließende Verschlußeinrichtungen für die Aufnahmekanäle 25 vorgesehen sind. Auch in diesem Beispiel sind an den freien Kanten der Trennwände 24 sich längs der Profilschiene 20 erstreckende Verschlußleisten 26 gebildet. Jedoch sind an diese Verschlußleisten 26 zusätzliche Verschlußschuhe 28 angeformt. Diese Verschlußschuhe können mit ihrer Sohle in Berührung sein oder sich zumindest so nahe kommen, daß jeglicher Durchgang durch den so stark verengten schlitzförmigen Zugang 27 unmöglich wird. Außerdem können die schlitzförmigen Zugänge 27 in diesem Beispiel schräg liegen, beispielsweise mit einem Winkel von 45° bezüglich der Trennwänden 24 orientiert sein, so daß der Neigung von elektrischen Leitungen 13 sich etwa parallel zu den Trennwänden 24 aus den Aufnahmekanälen 25 herauszubewegen entgegengewirkt wird. Bei der Ausbildung der Verschlußleisten 26 mit Verschlußschuhen gemäß Figur 3 wird eine verstärkte Verformung der Verschlußleisten 26 und der Trennwände 24 erforderlich, um elektrische Leitungen 13 in die Aufnahmekanäle 25 einzuführen oder aus diesen herauszunehmen. Es empfiehlt sich daher in dieser Ausführungsform der Erfindung, die Profilschienen aus gummielastischem Material herzustellen.

Eine weitere Möglichkeit für die zusätzliche Sicherung der Aufnahmekanäle 25 gegen ungewolltes Einführen von elektrischen Leitungen und gegen Herausfallen von elektrischen Leitungen kann dadurch erfolgen, daß die schlitzförmigen Zugänge 27 längs der Profilschiene 20 wellenförmig oder zickzackförmig geführt sind.

Figur 4 zeigt eine weitere Gestaltung einer Profilschiene 20. Auch in diesem Beispiel ist für die Mehrzahl von Aufnahmekanälen 25 eine gemeinsame Bodenwand 23 vorgesehen. Die sich von der Bodenwand 23 erstreckenden Trennwände 24 tragen wiederum, zum Teil an ihrer freien Kante Verschlußleisten 26, die schlitzförmige Zugänge 27 zwischen sich freilassen. Zur Sicherung der in der Profilleiste 20 gebildeten Aufnahmekanäle 25 ist in diesem Beispiel eine flexible Verschlußlasche 29 vorgesehen, die sich über die Gesamtheit der schlitzförmigen Zugänge 27 erstreckt und ggf. in ihrem mittleren Bereich verstärkt ausgebildet sein kann, während die seitlichen Bereiche erhöhte Flexibilität aufweisen können. Mit ihrem einen seitlichen Kantenbereich ist diese Verschlußlasche 29 an der einen Außenwand 30 der Profilschiene 20 befestigt. Entlang der anderen Längskante trägt die Verschlußlasche eine rippenförmige Verdickung 31 mit kreisförmigem Querschnitt. Die zweite Außenwand 32 der Profilschiene 20 ist längs ihrer freien Kante mit einer Klemmnut 33 ausgebildet, in die die Verdickung 31 eingedrückt werden kann, um die Verschlußlasche 29 in ihrer Schließstellung zu halten. In dieser Schließstellung legt sich die Verschlußlasche 29 gegen die Außenseite der Verschlußleisten 26 und bildet so einen sicheren Verschluß der schlitzförmigen Zugänge 27.

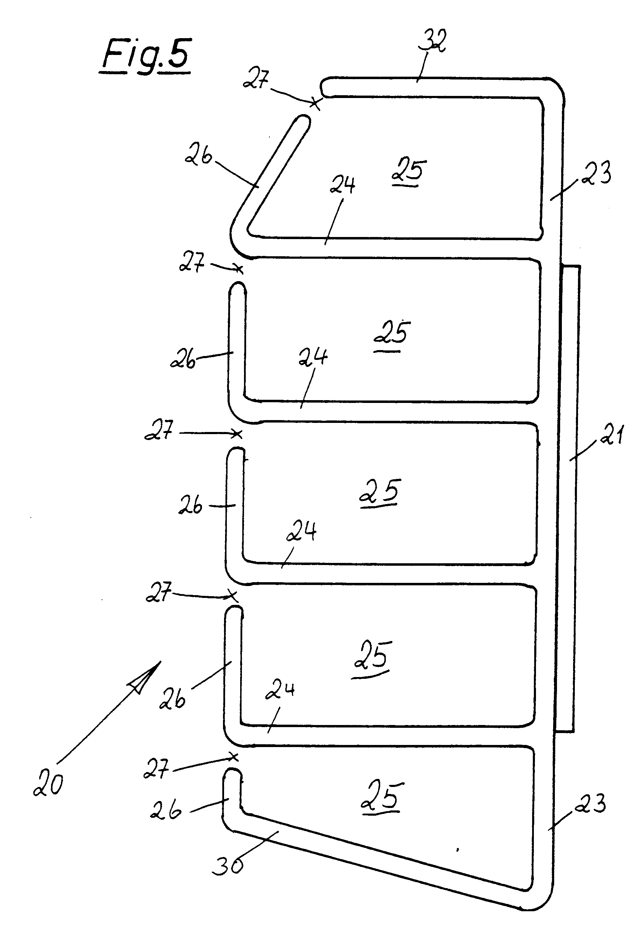

Figur 5 zeigt eine weitere Möglichkeit für die Querschnittsgestaltung der Profilschiene 20. In diesem Beispiel ist für die Mehrzahl der Aufnahmekanäle 25 wiederum eine gemeinsame Bodenwand 23 vorgesehen. Für die Anbringung der Profilschiene in der Anschlußschiene ist auch in diesem Beispiel an der Außenseite der Bodenwand 23 ein doppelseitiger Klebestreifen 21 angebracht. Die zwischen den Aufnahmekanälen 25 angeordneten Trennwände 24 tragen in diesem Beispiel wiederum Verschlußleisten 26, wobei jede Trennwand 24 längs ihrer von der Bodenwand 23 abgewandten freien Kante in eine Verschlußleiste 26 übergeht, also mit der Verschlußleiste 26 ein L-förmiges Profil bildet. Die jeweilige Verschlußleiste 26 erstreckt sich bis nahe an die freie Kante der benachbarten Trennwand 24 und bildet so mit der benachbarten Trennwand 24 den jeweiligen schlitzförmigen Zugang 27. Auf diese Weise erhalten die Verschlußleisten 26 eine Breite, die nahezu derjenigen des jeweiligen Aufnahmekanals 25 entspricht. Der schlitzförmige Zugang 27 kann deshalb relativ eng ausgebildet werden, weil die jeweilige Verschlußleiste 26 aufgrund ihrer großen Breite einen Bewegungsweg ausreichender Größe zum Öffnen des schlitzförmigen Zugangs 27 ermöglicht, um eine elektrische Leitung in den Aufnahmekanal 25 einlegen oder aus diesem herausnehmen zu können.

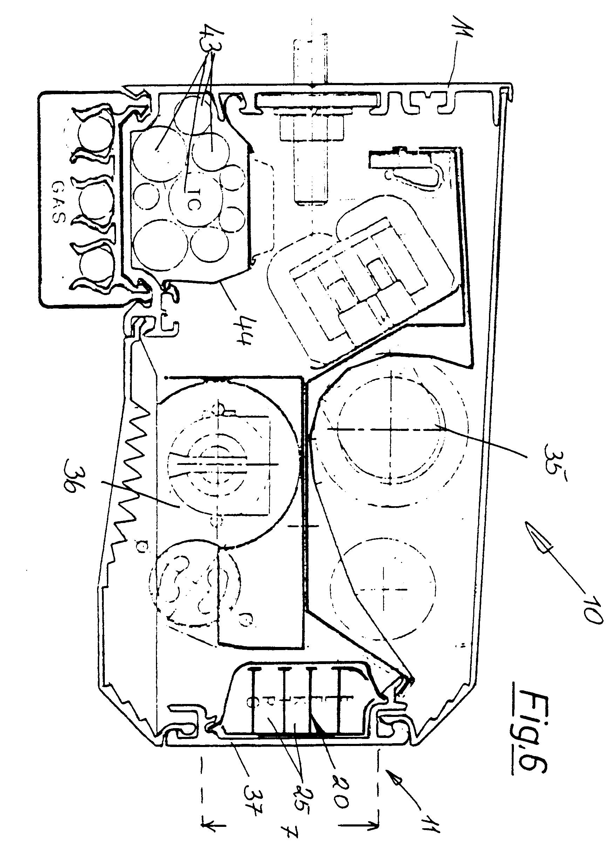

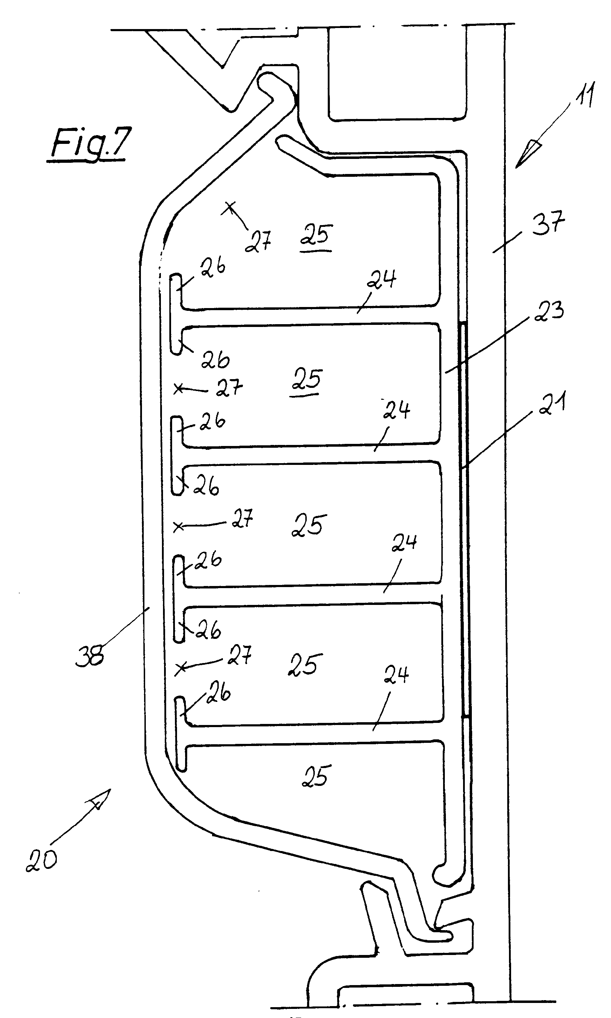

Im Beispiel der Figur 6 ist die Anschlußeinrichtung 10 mit in die Anschlußschiene 11 eingebauten Leuchten, nämlich einer Leuchte 35 für indirekte Raumbeleuchtung und einer Leuchte 36 für direkte Platzbeleuchtung ausgestattet. Die Anschlußschiene 11 trägt an der Innenseite ihrer zwischen den beiden Leuchten 35 und 36 angeordneten Vorderwand 37 eine Profilschiene 20, die in Figur 7 in vergrößertem Maßstab dargestellt ist. Diese Profilschiene 20 dient zur Aufnahme der nur mit Betriebsisolation versehenen elektrischen Starkstromleitungen und enthält dementsprechend eine Mehrzahl von Aufnahmekanälen 25 in die die Starkstromleitungen derart eingeordnet sind, daß jeweils nur Leitungen ein und desselben Stromkreises in einem Aufnahmekanal 25 untergebracht sind. Der grundsätzliche Aufbau der Profilschiene gemäß Figur 6 und 7 ist der gleiche wie derjenige der Profilschiene nach Figur 2 bis 5. Für sämtliche Aufnahmekanäle 25 ist eine gemeinsame Bodenwand 23 vorgesehen, von der sich kammartig die Trennwände 24 erstrecken. Die Trennwände 24 tragen - vergleichbar mit dem Beispiel der Figur 2 - an der der Bodenwand 3 entgegengesetzten freien Kante je zwei Verschlußleisten 26, wobei sich die Verschlußleisten 26 benachbarter Trennwände 24 einander entgegen erstrecken. Der zwischen den beiden sich einander entgegen erstreckenden Verschlußleisten 26 gebildete schlitzförmige Zugang 27 ist in diesem Beispiel relativ breit ausgebildet, so daß elektrische Leitungen bequem eingeführt und herausgenommen werden kann. Die Verschlußleisten 26 dienen dementsprechend in erster Linie zum Zurückhalten der elektrischen Leitungen in den jeweiligen Aufnahmekanälen 25 während der Montage. Zur Sicherung und zum eigentlichen Verschluß der Aufnahmekanäle 25 ist in diesem Beispiel ein schienenförmiges Deckelelement 38 vorgesehen, das wannenförmig ausgebildet ist und mit seinen beiden Seitenkanten in entsprechenden Haltenuten der Vorderwand 37 der Anschlußschiene 11 gehalten ist. Das Deckelelement 38 kann mit entsprechender Elastizität ausgebildet sein, das es sich mit seinen Seitenkanten in die entsprechenden Haltenuten der Vorderwand 37 einrasten läßt. Bevorzugt kann das Deckelelement 38 aus transparentem Kunststoff geformt sein, so daß es durch die relativ breiten, schlitzförmigen Zugänge 37 einen gewissen Einblick in die Aufnahmekanäle 25 gewährt.

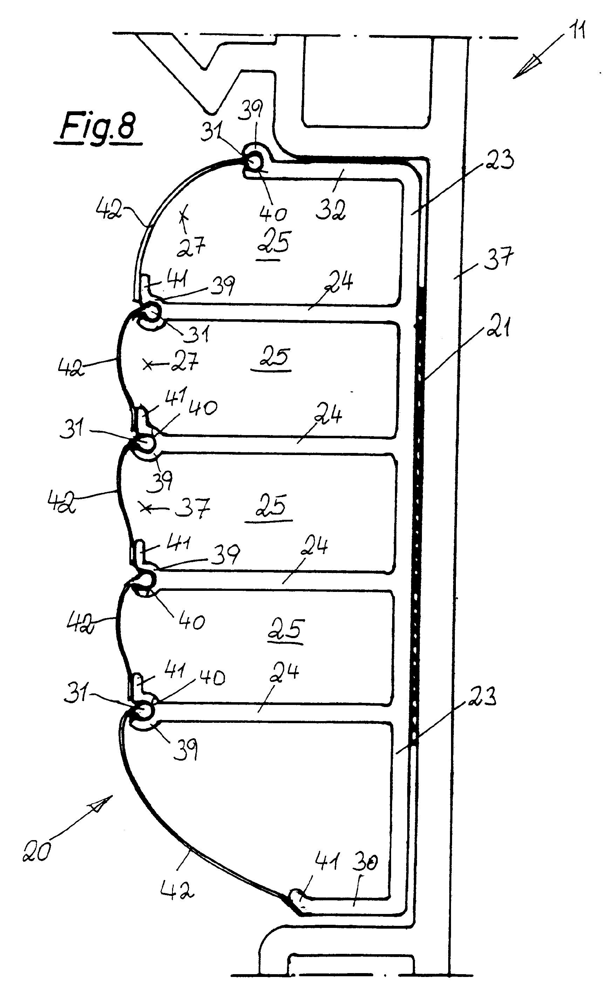

Bei der in Figur 8 gezeigten abgewandelten Ausführung ist die an die Innenseite der Vorderwand 37 der Anschlußschiene 11 anzubringende, beispielsweise mittels doppelseitigem Klebestreifen 21 zu befestigende Profilschiene 20 mit ähnlichem Querschnitt ausgebildet, wie die Profilschiene 20 gemäß Figur 7. Jedoch weisen die zwischen den Aufnahmekanälen 25 vorgesehenen, sich kammartig von der Bodenwand 23 erstreckenden Trennwände 24 an ihren freien Kanten anstelle von Verschlußleisten verdickte Rippen 39 auf, wobei jeder verdickte Rippe 39 eine Klemmnut 40 enthält, die sich bevorzugt über die gesamte Länge der Rippe 39 erstreckt, aber auch in Art von Abschnitten unterbrochen sein kann. An einer Seite ist an die verdickte Rippe 39 ein Befestigungsflansch 41 angeformt, der sich über einen Teil des Ausgangs des jeweiligen Aufnahmekanals 25 erstreckt und dadurch einen schlitzförmigen, wenn auch verbreiterten Zugang 27 zu dem jeweiligen Aufnahmekanal 25 bildet. Für jeden Aufnahmekanal 25 ist eine Verschlußlasche 42 an dem Befestigungsflansch angebracht, beispielsweise angeschweißt oder evtl. angeformt. Diese Verschlußlaschen 42 sind so ausgebildet, daß sie sich jeweils über den Zugang 27 zu einem Aufnahmekanals 25 erstrecken. An ihrer freien Längskante tragen die Verschlußlaschen 42 eine Verdickung 31, die in die Querschnitt 40 eindrückbar ist. Auf diese Weise ist jeder einzelne Aufnahmekanal 25 unabhängig von den anderen Aufnahmekanälen verschließbar und im Bedarfsfall d.h. zum Einlegen oder Herausnehmen einer elektrischen Leitung zu Öffnen.

Anstelle der die Aufnahmekanäle 25 auf ihre gesamte Länge abdeckenden Verschlußlaschen 42 können auch mehr oder weniger breite, streifenförmige Verschlußlaschen vorgesehen sein, die den Zugang 27 zu dem jeweiligen Aufnahmekanal 25 in Abständen überbrücken und auf diese Weise ebenfalls eine ausreichende Absicherung gegen ungewolltes Einführen von elektrischen Leitungen in die Aufnahmekanäle 25 und gegen Herausfallen von Leitungen bieten.

In den dargestellten Beispielen ist die Profilleiste 20 als getrenntes Element in die Anschlußschiene 11 eingesetzt. Es ist jedoch auch denkbar, eine Profilleiste, beispielsweise in Art der Ausführungsform nach Figur 7 oder Figur 8 fest in die Wandung der Anschlußschiene 11 einzuformen, wobei die Trennwände 24 starr ausgebildet sein könnten. Es wäre dann der Zugang 27 zu den Aufnahmekanälen 25 ausreichend breit auszubilden, um die elektrischen Leitungen auch ohne nennenswerte Verformung der Trennwände 24 und der Verschlußleisten 26 einführen und herausnehmen zu können. In jedem Fall müßten dann aber entweder ein Deckelelement 38 oder Verschlußlaschen 42 für die Aufnahmekanäle 25 vorgesehen sein. Das Deckelelement und die Verschlußlaschen müßten dann die erforderliche elastische oder gummielastische Verformbarkeit haben.

Bei den dargestellten Ausführungsbeispielen ist die Wandung der Aufnahmekanäle 25 aus elektrisch isolierendem, elastisch oder gummielastisch verformbaren Kunststoff gebildet. Sofern die Profilschiene 20 direkt in die aus Metall bestehende Anschlußschiene 11 eingeformt ist, also selbst aus Metall besteht, sollten die Aufnahmekanäle 25 mit elektrisch isolierendem Auskleidungen versehen sein, beispielsweise durch elektrisch isolierende Einlagen aus Kunststoff oder durch elektrisch isolierende Innenschichten, beispielsweise Lackierungen.

Für besondere Zwecke können die Trennwände 24 und die Bodenwand 23 der Aufnahmekanäle 20 aus gegenüber elektromagnetischen Strahlen und/oder gegenüber elektrische Induktion abschirmende Material bestehen. Um eine Abschirmung gegenüber elektromagnetischen Strahlen und/oder elektrischer Induktion zu erreichen, könnten die Trennwände und die Bodenwand der Aufnahmekanäle auch entsprechende abschirmende Einlageelemente enthalten. Diese Voraussetzungen würden sich beispielsweise besonders leicht erfüllen lassen, wenn die Profilleisten 20 direkt in die Wandung der Anschlußschiene eingeformt sind, beispielsweise in die Wandung einer Anschlußschiene aus Aluminium.

Die Profilschiene 20 mit Aufnahmekanälen 25, in die die nur mit Betriebsisolation versehenen elektrischen Versorgungsleitungen nach Stromkreisen getrennt einzuordnen sind, haben besondere Bedeutung in Verbindung mit der Führung von Starkstromleitungen. Schwachstromleitungen können entsprechend ebenfalls in derartige Aufnahmekanäle einsortiert werden. Es ist aber auch möglich, Schwachstromleitungen, insbesondere Telekommunikationsleitungen als Schlauchleitungen 43 in der Anschlußschiene 11 zu führen. Dies ist bei Schwachstromleitungen deshalb eher denkbar, weil die elektrische Isolation solcher Schwachstromleitungen wesentlich weniger aufwendig ist als bei Starkstromleitungen und weniger Platzbedarf bedingt. Solche Schlauchleitungen 43 können dann in einem vorher bestimmten Bereich des Innenraumes der Anschlußschiene 11 zusammengefaßt werden und mittels Klammern oder Abschottungswänden 44 zusammengehalten werden.

### Bezugszeichenliste

- 10 -: Anschlußeinrichtung
- 11 -: Anschlußschiene
- 12 -: Anschlußelement
- 13 -: elektrische Starkstromleitungen
- 14 -: Versorgungsleitungen für gasförmige u. flüssige Medien
- 15 -: Seitenwände von 11
- 16 -: Bodenwand
- 17 -: Halteleiste
- 18 -: Deckel

- 20 -: Profilschiene
- 21 -: doppelseitiger Klebestreifen
- 22 -: Rippen
- 23 -: Bodenwand
- 24 -: Trennwand
- 25 -: Aufnahmekanäle
- 26 -: Verschlußleiste
- 27 -: schlitzförmiger Zugang
- 28 -: Verschlußschuh
- 29 -: Verschlußlasche
- 30 -: Außenwand
- 31 -: Verdickung
- 32 -: Außenwand
- 33 -: Klemmnut

- 35 -: Leuchte
- 36 -: Leuchte
- 37 -: Vorderwand
- 38 -: Deckelelement
- 39 -: verdickte Rippen
- 40 -: Klemmnut
- 41 -: Befestigungsflansch
- 42 -: Verschlußlasche
- 43 -: Schlauchleitungen
- 44 -: Abschottungswand

## Patentansprüche

1. Anschlußeinrichtung für Ver- und Entsorgungssysteme an Arbeitsplätzen oder an Pflege- und Behandlungsplätzen, bei der im Inneren einer kanalartigen Anschlußschiene (11) ggf. neben anderen Systemen auch elektrische Versorgungssysteme in Form von verschiedenen elektrischen Stromkreisen zugehörigen Stromversorgungsleitungen und an zugänglichen Teilen an der Außenseite der Anschlußschiene (11) angeordneten Anschlußelemente (12) aufgenommen sind, wobei eine Mehrzahl von gegeneinander abgetrennten Aufnahmekanälen (25) für elektrische Leitungen (13) gebildet ist, die jeweils nur einen Teil des Innenquerschnitts der Anschlußschiene einnehmen und mittels Verschiußeinrichtungen gegenüber dem übrigen Innenraum der Anschlußschiene (11) verschließbar oder zumindest sicherbar sind, dadurch gekennzeichnet, daß eine in die Anschlußschiene (11) eingesetzte Profilschiene (20) mit kammartiger Querschnittsform vorgesehen ist, die eine für alle Aufnahmekanäle (25) gemeinsame Bodenwand (23) und zwischen den Aufnahmekanälen angeordnete Trennwände (24) bildet, wobei die Trennwände (24) an ihrer der Bodenwand entgegengesetzten Längskante sich einander gegenüberstehende elastisch oder gummielastisch nachgiebig ausgebildete Verschlußleisten (26) an der offenen Seite der Aufnahmekanäle (25) aufweist, die zwischen ihren einander zugewandten Kanten schlitzförmige Zugänge (27) zu den Aufnahmekanälen (25) bilden, und daß unterschiedlichen Stromkreisen zugehörende elektrische Leitungen (13) in getrennten Aufnahmekanälen (25) eingelagert sind.

2. Anschlußeinrichtung nach Anspruch 1, dadurch gekennzeichnet, daß die Trennwände (24) bzw. Seitenwände (30, 32) der Aufnahmekanäle (25) und/oder die Verschlußleisten (26) elastisch oder gummielastisch nachgiebig ausgebildet sind.

3. Anschlußeinrichtung nach einem der Ansprüche 1 oder 2, dadurch gekennzeichnet, daß ein zusätzliches schienenförmiges Deckelelement (38) über die Gesamtheit der Zugänge zu den Aufnahmekanälen (25) abnehmbar aufgesetzt ist.

4. Anschlußeinrichtung nach einem der Ansprüche 1 oder 2, dadurch gekennzeichnet, daß eine über die Gesamtheit der Zugänge (27) zu den Aufnahmekanälen (25) greifende flexible Verschlußlasche vorgesehen ist.

5. Anschlußeinrichtung nach einem der Ansprüche 1 oder 2, dadurch gekennzeichnet, daß eine Mehrzahl von in gegenseitigen Abständen entlang der Aufnahmekanäle (25) angeordneten, über die Gesamtheit deren Zugänge (27) greifenden, streifenförmigen Verschlußlaschen vorgesehen ist.

6. Anschlußeinrichtung nach einem der Ansprüche 1 oder 2, dadurch gekennzeichnet, daß zwischen und an den Aufnahmekanälen (25) vorgesehene Trennwände (24) und Außenwände (30, 32) an ihrer dem Innenraum der Anschlußschiene (11) zugewandten Kante eine Verschlußlasche (42) tragen, die jeweils gegen die Kante der benachbarten Trennwand (24) bzw. Außenwand (30, 32) bewegbar und dort lösbar befestigbar ist.

7. Anschlußeinrichtung nach Anspruch 6, dadurch gekennzeichnet, daß die Verschlußlasche (42) flexibel ausgebildet ist.

8. Anschlußeinrichtung nach Anspruch 6 oder 7, dadurch gekennzeichnet, daß jedem Aufnahmekanal (25) eine Mehrzahl von in gegenseitigen Abständen längs des Aufnahmekanals (25) angeordneten, über dessen Zugang (27) greifenden, streifenförmigen Verschlußlaschen zugeordnet ist.

9. Anschlußeinrichtung nach einem der Ansprüche 4 bis 8, dadurch gekennzeichnet, daß die Verschlußlasche (29) bzw. die Verschlußlaschen (42) längs ihres freien Randes mit einer Verdickung (31) ausgebildet sind und eine Außenwand (32) bzw. die Trennwände (24) und eine Außenwand (32) der Aufnahmekanäle (25) längs ihrer dem Innenraum der Anschlußschiene (11) zugewandten Längskante mit einer die Verdickung (31) jeweils einer Verschlußlasche (29, 42) aufnehmenden Klemmnut (33, 40) versehen sind.

10. Anschlußeinrichtung nach einem der Ansprüche 1 bis 9, dadurch gekennzeichnet, daß eine Profilleiste (20) als getrenntes Element in die Anschlußschiene (11) eingesetzt ist.

11. Anschlußeinrichtung nach einem der Ansprüche 1 bis 10, dadurch gekennzeichnet, daß die Wandung der Aufnahmekanäle (25) aus elektrisch isolierendem, elastisch oder gummielastisch verformbarem Kunststoff gebildet ist.

12. Anschlußeinrichtung nach einem der Ansprüche 1 bis 11, dadurch gekennzeichnet, daß die Wandung der Aufnahmekanäle (25) aus gegenüber elektromagnetischen Strahlen und/oder gegenüber elektrischer Induktion abschirmendem Material besteht.

13. Anschlußeinrichtung nach einem der Ansprüche 1 bis 11, dadurch gekennzeichnet, daß die Wandung der Aufnahmekanäle (25) gegenüber elektromagnetischen Strahlen und/oder gegenüber elektrischer Induktion abschirmende Einlageelemente enthält.

## Claims

1. Connection device for supply and disposal systems in workplaces or in places for the care and treatment of patients wherein, inside a channel-like connection rail (11) and possibly in addition to other systems, there are also contained electrical supply systems in form of current supply lines assigned to different electrical circuits and connection elements (12) disposed at accessible portions at the outside of the connection rail (11), a plurality of housing channels (25) for electrical wires (13) separated one from another being formed, each taking only a part of the inner cross-section of the connection rail and being constructed so as to be sealed or at least secured against the remaining inner space of a connection rail (11), characterized in that there is provided a profiled rail (20) being inserted into the connection rail (11) and having a comb-like cross-sectional form, said profiled rail (20) forming a bottom wall (23) comman to all housing channels (25) and partition walls (24) disposed between said housing channels, said partition walls comprising closure strips (26) at their longitudinal edge opposite to said bottom wall at the open side of the housing channels (25), said closure strips being developed so as to face one another and to reveal an elastical or gum-elastical flexibility and, between their edges facing one another, form slot-shaped entries (27) to the housing channels (25) and in that electrical wires (13) assigned to different circuits are placed in separate housing channels 825).

2. Connection device according to claim 1, characterized in that the partition walls (24) or the side walls (30, 32), respectively of the housing channels (25) and/or the closure strips (26) are developed so as to reveal an elastic or gum-elastic flexibility.

3. Connection device according to one of claims 1 or 2, characterized in that an additional rail-like lid element (38) is removably put on the whole entries of the housing channels (25).

4. Connection device according to one of claims 1 or 2, characterized in that there is provided 2 flexible closure plate covering the whole entries (27) to the housing channels (25).

5. Connection device according to one of claims 1 or 2, characterized in that there is provided a plurality of stripe-like closure plates disposed at mutual distances along the housing channels (25) and covering the whole entries (27) thereof.

6. Connection device according to one of claims 1 or 2, characterized in that partition walls (24) and outer walls (30, 32) provided between and at the housing channels (25) have a closure plate (42) at their edge facing the interior of the connection rail (11), each closure plate (42) being developed so as to be appropriate to be moved against the edge of the adjacent partition wall (24) or outer wall (30, 32) respectively, and there to be removably mounted.

7. Connection device according to claim 6, characterized in that the closure plate (42) is developed so as to be flexible.

8. Connection device according to claims 6 or 7, characterized in that to each housing channel (25) is assigned a plurality of strip-like closure plates disposed at mutual distances along the housing channel (25) and covering the entry (27) thereof.

9. Connection device according to one of claims 4 to 8, characterized in that the closure strips (42) are developed so as to provide a thickening (31) alongside the free edge thereof, and in that an outer wall (32) or the partition walls (24) and an outer wall (32) of the housing channels (25) are provided with a clamping groove (33, 40) alongside the longitudinal edge facing the interior of the connection rail (11), said clamping groove (33, 40) receiving in each case the thickening (31) of a closure plate (29, 42).

10. Connection device according to one of claims 1 to 9, characterized in that a profiled strip (20) is inserted into the connection rail (11) as a separate element.

11. Connection device according to one of claims 1 to 10, characterized in that the sides of the housing channels (25) are formed of an electrically insulating, elastical or gum-elastical deformable synthetic material.

12. Connection device according to one of claims 1 to 11, characterized in that the sides of the housing channels (25) consist of material shielding from electrical magnetic radiation or from electric induction.

13. Connection device according to one of claims 1 to 11, characterized in that the sides of the housing channels (25) contain insert elements shielding from electical magnetic radiation and/or from electric induction.

## Revendications

1. Dispositif de connexion pour systèmes d'alimentation et d'évacuation de places de travail ou de soins et de traitement, dans lequel sont prévus, à l'intérieur d'un rail de connexion (11) en canal, le cas échéant outre d'autres systèmes, également des systèmes d'alimentation électriques se présentant sous forme de lignes d'alimentation électriques appartenant à différents circuits électriques et, en des endroits accessibles de la face extérieure du rail de connexion (11), des éléments de connexion (12), une pluralité de canaux de réception (25) séparés les uns des autres et destinés à des lignes électriques (13) étant formés, chacun d'eux n'occupant qu'une partie de la section transversale interne du rail de connexion et pouvant être fermé ou au moins protégé au moyen du dispositif de fermeture, vis-à-vis du restant de l'espace intérieur du rail de connexion (11), caractérisé en ce qu'un rail profilé (20), à section transversale en forme de peigne, inséré dans le rail de connexion (11) est prévu et forme une paroi de fond (23) commune pour tous les canaux de réception (25) et des parois de séparation (24) disposées entre les canaux de réception, les parois de séparation (24) présentant, sur leur bord longitudinal opposé à la paroi de fond, des bandes de fermeture (26) opposées deux à deux, souples et de nature élastique ou élastomère, placées sur la face ouverte des canaux de réception (25) et formant entre leurs bords tournés l'un vers l'autre des accès (27), en forme de fente, aux canaux de réception (25), et en ce que des lignes électriques (13), appartenant à différents circuits électriques, sont installées dans des canaux de réception (25) séparés.

2. Dispositif de connexion selon la revendication 1, caractérisé en ce que les parois de séparation (24) ou les parois latérales (30, 32) des canaux de réception (25) et/ou les bandes de fermeture (26) sont souples et de nature élastique ou élastomère.

3. Dispositif de connexion selon la revendication 1 ou 2, caractérisé en ce qu'un élément supplémentiare formant couvercle (38), en forme de rail, est posé de manière amovible sur l'ensemble des accès aux canaux de réception (25).

4. Dispositif de connexion selon la revendication 1 ou 2, caractérisé en ce qu'une patte de fermeture, flexible, couvrant la totalité des accès (27) aux canaux de réception (25), est prévue.

5. Dispositif de connexion selon la revendication 1 ou 2, caractérisé en ce qu'une pluralité de pattes de de fermeture, en forme de bande, couvrant la totalité des accès (27) et réparties à des distances mutuelles le long des canaux de réception (25), est prévue.

6. Dispositif de connexion selon la revendication 1 ou 2, caractérisé en ce que des parois de séparation (24) et des parois extérieures (30, 32), prévues entre et sur les canaux de réception (25), portent, sur leur bord tourné vers l'espace intérieur du rail de connexion (11), une patte de fermeture (42) pouvant chaque fois être amenée contre le bord de la paroi de séparation (24) ou de la paroi extérieure (30, 32) voisine et y être fixée de façon amovible.

7. Dispositif de connexion selon la revendication 6, caractérisé en ce que la patte de fermeture (42) est flexible.

8. Dispositif de connexion selon la revendication 6 ou 7, caractérisé en ce qu'une pluralité de pattes de fermeture en forme de bande, réparties à des distances mutuelles le long du canal de réception (25), et couvrant sur son accès (27), est associée à chaque canal de réception (25).

9. Dispositif de connexion selon l'une quelconque des revendications 4 à 8, caractérisé en ce que la patte de fermeture (29) ou les pattes de fermeture (42) présentent un épaississement (31) le long de leur bord libre, et une paroi extérieure (32) ou les parois de séparation (24) et une paroi extérieure (32) des canaux de réception (25) sont pourvues, le long de leur bord longitudinal tourné vers l'espace intérieur du rail de connexion (11), d'une rainure de serrage (33, 40) recevant l'épaississement (31) d'une patte de fermeture (29, 42) respective.

10. Dispositif de connexion selon l'une des revendications 1 à 9, caractérisé en ce qu'une bande profilée (20), réalisée sous forme d'un élément séparé, est insérée dans le rail de connexion (11).

11. Dispositif de connexion selon l'une des revendications 1 à 10, caractérisé en ce que la paroi des canaux de réception (25) est réalisée en matière synthétique isolante de l'électricité, et déformable de manière élastique ou élastomère.

12. Dispositif de connexion selon l'une des revendications 1 à 11, caractérisé en ce que la paroi des canaux de réception (25) est réalisée en un matériau protégeant contre les rayons électromagnétiques et/ou l'induction électrique.

13. Dispositif de connexion selon l'une des revendications 1 à 11, caractérisé en ce que la paroi des canaux de réception (25) contient des inserts protégeant contre les rayons électromagnétiques et ou l'induction électrique.
